Europäisches Patentamt

European Patent Office

Office européen des brevets

(19)

(11) **EP 0 533 223 B1**

(12) # EUROPEAN PATENT SPECIFICATION

(45) Date of publication and mention
of the grant of the patent:
**01.10.1997 Bulletin 1997/40**

(51) Int Cl.⁶: **G01S 13/44**

(21) Application number: **92202228.0**

(22) Date of filing: **21.07.1992**

(54) **Method and apparatus for the determination of the height of a target**

Verfahren und Gerät zur Feststellung der Höhe eines Zieles

Procédé et appareil pour déterminer la hauteur d'une cible

(84) Designated Contracting States:
**BE CH DE ES FR GB GR LI NL PT SE**

(30) Priority: **16.08.1991 NL 9101394**

(43) Date of publication of application:
**24.03.1993 Bulletin 1993/12**

(73) Proprietor: **HOLLANDSE SIGNAALAPPARATEN B.V.**
**7550 GD Hengelo (NL)**

(72) Inventor: **Groenenboom, Albert**
**NL-7555 GP Hengelo (NL)**

(56) References cited:
**EP-A- 0 433 675**          **FR-A- 2 312 037**
**FR-A- 2 408 843**

• **PROCEEDINGS OF THE IEEE, vol. 62, no. 6, 1 June 1974, New York, US, pp 687-704; BARTON: 'LOW ANGLE RADAR TRACKING'**

**Description**

The invention relates to a method for determining, by means of a radar apparatus, the height of a low-elevation target, the radar apparatus being provided with transmitting and receiving units to which are connected a transmitting and receiving antenna means and a signal processing unit, comprising the steps of:

- illuminating the target by electromagnetic radiation emitted by the transmitting unit and the antenna means;
- receiving the reflected transmitted signal by means of the antenna means, which signal is reflected directly via the target and indirectly via the target and the earth surface;
- deriving by means of the receiving unit, complex sum signals $\Sigma$ and complex elevation difference signals $\Delta$ from signals received by means of the antenna means;
- deriving the height of the target from the complex sum and elevation difference signals by carrying out an algorithm by means of the signal processing unit;
- deriving, on the basis of the algorithm, the target range R and the complex elevation error voltage $S = \Delta/\Sigma$ from the complex signals $\Sigma$ and $\Delta$.

The invention furthermore relates to an apparatus for determining the height of a low-elevation target, comprising a radar apparatus provided with transmitting and receiving units connected to transmitting and receiving antenna means, arranged to illuminate the target by electromagnetic radiation emitted by the transmitting unit and the antenna means and arranged to receive a reflected transmitted signal, which transmitted signal is reflected by the target and by the target via the earth surface in the direction of the antenna means, and arranged to generate by means of the receiving unit, complex sum signals $\Sigma$ and at least complex elevation difference signals $\Delta$, which are representative for the target, and comprising a signal processor connected to the receiving unit provided with an algorithm for determining a calculated height of the target $h_t$, and comprising means connected to the signal processor for directing the antenna means at an aiming point and comprising means to derive from the signals $\Sigma$ and $\Delta$ the complex elevation error voltage $S = \Delta/\Sigma$, and the target range R.

The height of a target can be determined by means of a monopulse radar apparatus. The monopulse principle is described in "Introduction to Radar Systems" by M.I. Skolnik, second edition, pages 160-190. A problem encountered in the determination of the height of a target which is flying at a low altitude above the sea surface and, to a lesser extent, also the earth surface, is described on pages 172-176. This problem is due to the phenomenon that the radar apparatus not only receives echo signals directly from the target, but also target echoes reflected by the sea surface. Without the occurrence of this multipath effect, the height of the target can be easily derived from the values of the target range R and the elevation error voltage $E(\theta)$, delivered by the monopulse radar apparatus. The multipath effect causes the elevation error voltage to assume a complex value which renders an accurate determination of the target height impossible.

The occurrence of said multipath effect can only be avoided by selecting a radar antenna beamwidth which is narrow to such an extent that only echo signals directly from the target are received, thereby excluding unwanted target echoes reflected by the sea surface. This method has the drawback, however, that with such a narrow beam, a relatively long time might be required to acquire the target. The patent US-A 4,743,907 provides an elegant solution to obviate this drawback. By fully integrating two monopulse radar apparatuses, the first radar apparatus having a relatively large wavelength and a consequent wide beam, the second radar apparatus having a relatively small wavelength and a consequent narrow beam, it is possible to achieve an optimal performance in both the acquisition and tracking phases. Such a system, however, entails considerable cost.

A method for accurately determining target height, notwithstanding the occurrence of multipath, is described in the patent US-A 4,796,031. According to the method disclosed in this patent, the radar antenna is not directed at the actual target, but at a point in space exactly between the actual target and its image. By subsequently measuring with at least two different radar wavelengths, which bear a predetermined relation, a system of equations can be solved, from which several possible target heights can be derived. Thus, by successively comparing possible target heights derived on the basis of this method, the target height can be determined.

An alternative method for accurately determining the target height is described in patent EP-B 0.087.355. According to this method the antenna orientation is constantly varied. Using measuring values obtained at various antenna orientations, it will again be possible to solve systems of equations, from which the target height can be derived.

Both methods are cumbersome and have the drawback that the monopulse radar apparatus is directed at an aiming point which does not coincide with the target. For a monopulse radar apparatus, this misalignment is an evident suboptimal condition which, however, in light of the state of the art is required in order to obtain a solvable system of equations.

A method according to the introductory part of this application is furthermore known from FR-A 2.408.843. Here a monopulse radar apparatus is used. The elevation or azimuth difference signal is divided by the sum signal, yielding an error signal. The error signal would be zero if the antenna would be directed at the target, in absence of a second trace. In presence of a second trace though, this error signal is not zero anymore. In addition, an angle between the sum signal and the difference signal vectors is present. The antenna in the radar apparatus is directed in a way that the mentioned angle becomes zero and the target height is established by means of an electronic circuit, making use of the knowledge that the mentioned angle is zero. This results in the suboptimal condition that the antenna is not directed at the target anymore.

A method according to the introductory part of this application is furthermore known from FR-A 2.312.037. Here, a monopulse cluster is directed to the target in a way that two transmitters of the monopulse cluster are aligned vertically one above the other. By consequence, two transmitters are aligned horizontally next to each other. In addition to the sum and two difference signals, an extra signal is used, obtained by adding signals of two vertically and horizontally opposed transmitters and subsequently subtracting those two added signals. By applying a mathematical formula, the target height can be derived. A disadvantage of this method is that the monopulse cluster should be aligned in a very particular way.

It appears to be more advantageous and simple to direct the antenna means substantially at the target and to calculate the target height by making use of the time derivative of the angle between the sum and difference signal vectors.

The method according to our invention is defined in claim 1 and does not contain the drawbacks mentioned above. The apparatus according to the invention is defined in claim 4.

The invention will be further explained with reference to the following figures, of which:

Fig. 1    presents a diagram of a possible embodiment of a monopulse radar apparatus according to the invention;
Fig. 2    presents a possible elevation error voltage curve;
Fig. 3    illustrates the multipath effect.

For accurately determining the height of a target flying at a low altitude above the sea or earth surface, a monopulse radar apparatus is used. In this situation, sum signals and elevation difference signals delivered by the radar apparatus assume complex values, which are to be further processed by a signal processor connected to the radar apparatus.

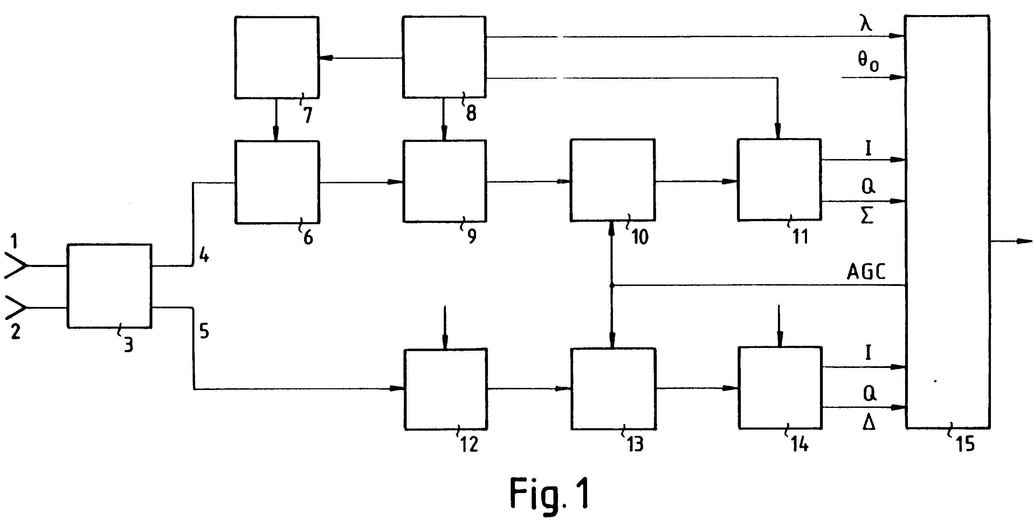

Fig. 1 presents a diagram of a possible embodiment of a monopulse radar apparatus according to the invention. In order not to unnecessarily complicate the description, only the monopulse behaviour in elevation is included in the analysis.

Two antenna elements 1, 2, one placed on top of the other, are connected to a conventional coupler 3, forming a sum channel 4 and a difference channel 5. A transmitter 7, which is controlled from a frequency and timing unit 8 and which transmits pulsed signals, is connected to the sum channel 4 via a TR-switch 6. Signals received via the sum channel are fed via TR-switch 6 to a mixer stage 9, which receives an LO signal from the frequency and timing unit 8. The resulting intermediate-frequency signal is amplified in intermediate-frequency amplifier 10 and converted into a digital, complex sum signal $\Sigma$ by A/D converter and Hilbert filter 11. Signals received via the difference channel 5 are fed to a mixer stage 12, which also receives an LO channel from the frequency and timing unit 8. The resulting intermediate-frequency difference signal is amplified in intermediate-frequency amplifier 13 and converted into a digital, complex difference signal $\Delta$ by A/D converter and Hilbert filter 14. Both signals are fed to a signal processor 15, by means of which an elevation error voltage $S = \Delta/\Sigma$ is determined. The A/D converter and Hilbert filters 11, 14 may be replaced by phase-sensitive quadrature detectors plus A/D converters, but the embodiment described here is more satisfactory with regard to gain and offset stability.

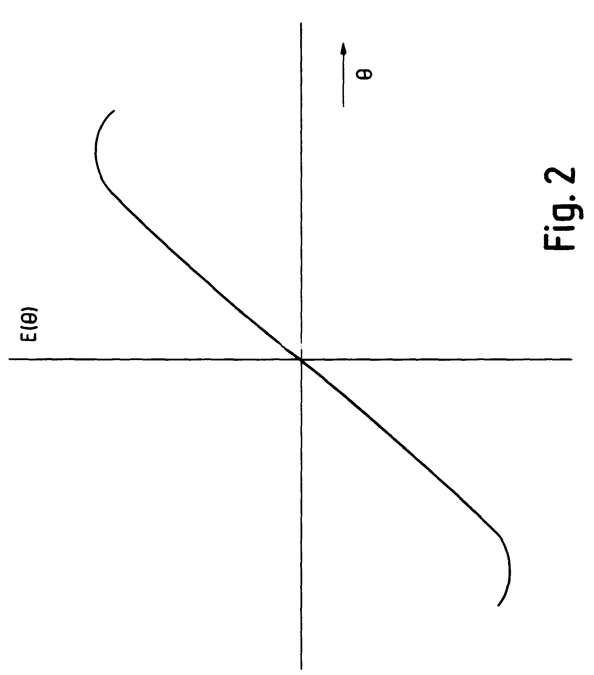

Assuming there is a single stationary target in the beam, the vectors $\Sigma$ and $\Delta$ will remain identical for each transmitted pulse and will have a fixed angle in the complex plane. For a single moving target in the beam, both vectors will rotate at the doppler frequency, but will retain the same fixed angle. It is common practice to apply a phase-alignment point in one of both channels, such that both vectors can be aligned. For a single target the elevation error voltage will then be real. The real elevation error voltage curve $E(\theta)$ is represented in Fig. 2. It is noted that the elevation error voltage, notwithstanding its name, is dimensionless. Insofar as this is relevant, is is possible to linearize $E(\theta)$ in signal processor 15, at least for small values of $\theta$; this may be effected by means of a linearizing table. In that case $E(\theta) = K$. $\theta$ applies for small angles $\theta$. Furthermore, signal processor 15 may generate an AGC control signal for adjusting the gain of both intermediate-frequency amplifiers 10, 13 such that the amplitude of the target echo signal in the sum signal $\Sigma$ is kept substantially constant. This results in less stringent requirements as regards the phase tracking of the sum channel and the difference channel; it allows the use of A/D converters with a limited dynamic range, and limits the size of the linearizing table.

In general, signal processor 15 will perform several other functions which are of minor relevance to the invention described here. Thus, a conventional time-gate function will be implemented in signal processor 15. Also, a form of MTI or MTD doppler processing will be applied to the values delivered by the A/D converters and Hilbert filters 11, 14. In addition, signal processor 15 will generate control signals for directing the transmitting antenna and the receiving antenna.

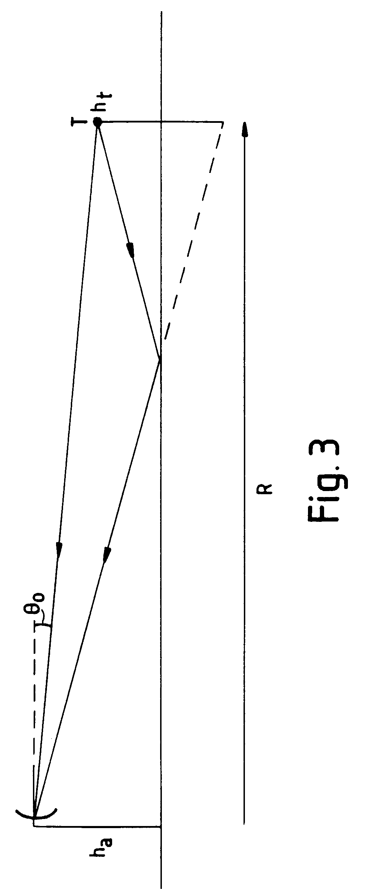

In the event of a single target in the beam, an echo of which is received directly and as a mirror image via the sea surface, as represented in Fig. 3, S proves to assume a complex value. In Fig. 3 $h_a$ represents the height of the antenna above the sea surface, $h_t$ represents the height of the target above the sea surface, R represents the range from target to radar antenna and $\theta_o$ represents the antenna elevation angle. For a moving target, S becomes a function of the target range R, the target height $h_t$, the radar transmitter wavelength $\lambda$ and of several system constants. Our objective is to find an equation which incorporates these values and from which $h_t$ can be derived. This equation will then constitute the basis for the claimed method and apparatus.

For forming this equation we define:

$h_a$      height of the antenna above the sea surface.
$h_t$      height of the target above the sea surface.
R        range from target to radar antenna.
$\theta_o$      antenna elevation angle.
$\theta_t$      elevation error angle of the target.
$\theta_m$      elevation error angle of the mirror image.
$\rho$        reflection coefficient of the sea surface.
$\Psi$        perturbation phase for the reflection on the sea surface.
$\phi$        phase difference between the reflections of target and mirror image.
$G_\Sigma(\theta)$    antenna diagram of the elevation sum channel.
$G_\Delta(\theta)$    antenna diagram of the elevation difference channel.
$E(\theta)$      elevation error voltage curve.

The following approximations can now be derived:

$$\theta_t = \frac{h_t - h_a}{R} - \theta_o \tag{1}$$

$$\theta_m = \frac{-h_t - h_a}{R} - \theta_o \tag{2}$$

$$\phi = \frac{4\pi\, h_t h_a}{\lambda R} + \Psi \tag{3}$$

Furthermore the following applies:

$$E(\theta) = \frac{G_\Delta(\theta)}{G_\Sigma(\theta)} \tag{4}$$

$$\Sigma = G_\Sigma(\theta_t) - \rho G_\Sigma(\theta_m).e^{j\phi} \tag{5}$$

$$\Delta = G_\Delta(\theta_t) - \rho G_\Delta(\theta_m).e^{j\phi} \tag{6}$$

$$S = \frac{\Delta}{\Sigma} = \frac{G_\Delta(\theta_t) - \rho G_\Delta(\theta_m).e^{j\phi}}{G_\Sigma(\theta_t) - \rho G_\Sigma(\theta_m).e^{j\phi}} \tag{7}$$

Subsequently we can define:

$$A = E(\theta_t) = E(\frac{h_t - h_a}{R} - \theta_o) \tag{8}$$

$$B = - E(\theta_m) = - E(\frac{-h_t - h_a}{R} - \theta_o) = E(\frac{h_t + h_a}{R} + \theta_o) \tag{9}$$

The last equation is based on the odd symmetry of $E(\theta)$.

We define a corrected reflection coefficient G, thereby considering that in case of a monopulse antenna directed at the target, the reflection of the mirror image is additionally attenuated by the antenna diagram:

$$G = \rho \, \frac{G_\Sigma(\frac{-h_t - h_a}{R} - \theta_o)}{G_\Sigma(\frac{h_t - h_a}{R} - \theta_o)} \tag{10}$$

Subsequently it follows from (3), (7), (8), (9) and (10) that:

$$S = A + \frac{e^{j\phi}}{1 - G \, e^{j\phi}} \cdot G.(A + B) \tag{11}$$

During normal target tracking, the antenna is directed at the target, consequently A = 0:

$$S = \frac{e^{j\phi}}{1 - R \, e^{j\phi}} \cdot G.B \tag{12}$$

The real part of S can be defined as follows:

$$Re(S) = \frac{\cos \phi - G}{1 + G^2 - 2G \cos \phi} \cdot G.B \tag{13}$$

For the argument of S, the following applies:

$$\arg(S) = \phi + arctg \, (\frac{G \sin \phi}{1 - G \cos \phi}) \tag{14}$$

hence:

$$\frac{d}{dt} \arg(S) = (1 + \frac{\cos \phi - G}{1 + G^2 - 2G \cos \phi}) \frac{d}{dt} \phi \tag{15}$$

A combination of (13) and (15) yields the desired equation:

$$\frac{d}{dt} \arg(S) = (1 + \frac{Re(S)}{B}) \frac{d}{dt} \phi \tag{16}$$

A closer examination reveals that $h_t$ and $\Psi$ are the only unknowns in (16) in addition to several system parameters and measuring values.

For a smooth sea surface we may assume that:

$$\frac{d}{dt} \Psi = 0 \tag{17}$$

Together with (16) this yields:

$$\frac{d}{dt}\arg(S) = \frac{4\pi\ h_a h_t}{\lambda} \cdot (1 + \frac{Re(S)}{E(\frac{h_a + h_t}{R} - \theta_o)}) \cdot \frac{d}{dt}(\frac{1}{R}) \qquad (18)$$

Assuming that $E(\theta)$ is linear for small values of $\theta$, this is a quadratic equation in $h_t$. If $E(\theta)$ is not linear, the equation can be solved, for example following the Newton method. From a series of target height estimates, thus obtained in time, the best target height estimate is derived by a conventional filtering process with a time constant and a provision for eliminating extremely deviating estimates, a method well known in the art.

A second solution shall be selected, if the smooth sea surface condition does not apply, consequently if

$$\frac{d}{dt}\Psi \neq 0.$$

We can then eliminate the unknown $\Psi$ by measuring at two different wavelengths. The following can be derived from (16):

$$\arg(S_2) - \arg(S_1) = \int_{\phi_1}^{\phi_2} (1 + \frac{Re(S)}{B})\ d\phi \qquad (19)$$

For minor wavelength differences the following approximation can be used:

$$\frac{1}{\phi_2 - \phi_1} \int_{\phi_1}^{\phi_2} Re(S)\ d\phi = \frac{Re(S_1) + Re(S_2)}{2} \qquad (20)$$

With (3), (9) and (19) this yields:

$$\arg(S_2) - \arg(S_1) = \frac{4\pi\ h_a h_t}{R}(\frac{1}{\lambda_2} - \frac{1}{\lambda_1})(1 + \frac{Re(S_1) + Re(S_2)}{2E(\frac{h_a + h_t}{R} - \theta_o)}) \qquad (21)$$

This equation can be solved by means of one of the methods described under (18).

The values of $h_t$ thus obtained can be used for directing the transmitting antenna and the receiving antenna at the target. In this way an elevation error angle is realised which may show an improvement by an order of magnitude as compared against a monopulse radar apparatus where the imaginary part of the elevation error voltage is ignored. In addition, this method is comparatively insusceptible to perturbations, particularly $A = 0$ proves to be a non-stringent condition.

## Claims

1. Method for determining the height $h_t$ of a low-elevation target by means of a radar apparatus, the radar apparatus being provided with transmitting and receiving units to which are connected a transmitting and receiving antenna means and a signal processing unit, whereby a transmitted signal is reflected directly via the target and indirectly via the target and the earth surface, comprising the steps of:

   - illuminating the target by electromagnetic radiation emitted by the transmitting unit and the antenna means;
   - receiving the reflected transmitted signal by means of the antenna means;

- deriving by means of the receiving unit, complex sum signals $\Sigma$ and complex elevation difference signals $\Delta$ from signals received by means of the antenna means;
- deriving, a target range R and a complex elevation error voltage $S = \Delta/\Sigma$ from the said complex signals $\Sigma$ and $\Delta$,

characterised in that the method furthermore comprises the steps of:

- calculating the real part of the complex elevation error voltage S as Re(S);
- calculating the time derivative of the argument of the complex elevation error voltage S as

$$\frac{d}{dt} \arg(S);$$

- calculating the said target height $h_t$ from the previously calculated values of $\frac{d}{dt} \arg(S)$, R and Re(S);
- directing the antenna means at the target by making use of the thus calculated target height.

2. Method as claimed in claim 1, whereby, for the antenna means and the receiving unit, a real error voltage curve $E(\theta)$ is known for a target with an elevation error angle $\theta$, the transmitted signal has a wavelength $\lambda$, the antenna means is positioned at a height $h_a$ above the earth surface and makes an elevation angle $\theta_o$ with the earth surface, characterised in that the equation

$$\frac{d}{dt} \arg(S) = \frac{4\pi\, h_a\, h_t}{\lambda} \cdot \left(1 + \frac{Re(S)}{E\left(\dfrac{h_a + h_t}{R} - \theta_o\right)}\right) \cdot \frac{d}{dt} \left(\frac{1}{R}\right)$$

is solved.

3. Method as claimed in claim 1, whereby for the antenna means and the receiving unit, a real elevation error curve $E(\theta)$ is known for a target with an elevation angle $\theta$, the antenna means successively transmits at least signals of wavelengths $\lambda_1$ and $\lambda_2$, in which $\lambda_1 \neq \lambda_2$, the antenna means is positioned at a height $h_a$ above the earth surface and makes an elevation angle $\theta_o$ with the earth surface and whereby the values

$$\Sigma_1,\ \Delta_1,\ S_1 = \frac{\Delta_1}{\Sigma_1},\ \Sigma_2,\ \Delta_2 \text{ and } S_2 = \frac{\Delta_2}{\Sigma_2},$$

are determined, characterised in that for determining $h_t$ the equation

$$\text{Arg}(S_2) - \text{Arg}(S_1) = \frac{4\pi\, h_a h_t}{R} \left(\frac{1}{\lambda_2} - \frac{1}{\lambda_1}\right) \left(1 + \frac{Re(S_1) + Re(S_2)}{2E\left(\dfrac{h_a + h_t}{R} - \theta_o\right)}\right)$$

is solved.

4. Apparatus for determining the height of a low-elevation target, comprising a radar apparatus providqd with transmitting and receiving units to which a transmitting and receiving antenna means is connected, whereby the transmitting unit and the antenna means are arranged for illuminating the target by electromagnetic radiation and whereby the receiving unit and the antenna means is arranged for receiving the transmitted signal reflected by the target and by the target via the earth surface, whereby the antenna means is positioned at a height $h_a$ above the earth surface and makes an elevation angle $\theta_O$ with the earth surface and whereby the receiving unit is arranged to generate complex sum signals $\Sigma$ and complex elevation difference signals $\Delta$, which are representative for the target, a signal processor connected to the receiving unit, provided with an algorithm for determining the height of the target $h_t$, and means connected to the signal processor for directing the transmitting and receiving antenna means at an aiming point, whereby the signal processor is arranged to determine the complex elevation error voltage S out of the complex sum signals $\Sigma$ and complex elevation difference signals $\Delta$ by equating $S = \Delta/\Sigma$ and arranged to determine the target range R, characterised in that the signal processor by means of the algorithm therein is arranged to

- calculate the real part of S as Re(S);
- calculate the time derivative of the argument of S as

$$\frac{d}{dt} \arg(S);$$

- calculate the target height $h_t$ from the previously calculated values of $\frac{d}{dt} \arg(S)$, R and Re(S);
- direct the transmitting and receiving antenna means at the target by making use of the thus calculated target height.

5. Apparatus as claimed in claim 4, whereby for the antenna means and the receiving unit a real error voltage curve $E(\theta)$ is known for a target with an elevation error angle $\theta$, the transmitted signal has a wavelength $\lambda$, the antenna means is positioned at a height $h_a$ above the earth surface and makes an elevation angle $\theta_o$ with the earth surface, characterised in that

$$\frac{d}{dt} \arg(S) = \frac{4\pi\, h_a\, h_t}{\lambda} \cdot (1 + \frac{Re(S)}{E(\frac{h_a + h_t}{R} - \theta_o)}) \cdot \frac{d}{dt} (\frac{1}{R})$$

is determined.

6. Apparatus as claimed in claim 4, whereby for the antenna means and the receiving unit, a real error voltage curve $E(\theta)$ is known for a target with an elevation angle $\theta$, the antenna means being provided with means for successively generating transmitter signals of wavelengths $\lambda_1$ and $\lambda_2$ in which $\lambda_1 \neq \lambda_2$ and whereby the values

$$\Sigma_1, \Delta_1, S_1 = \frac{\Delta_1}{\Sigma_1}, \Sigma_2, \Delta_2 \text{ and } S_2 = \frac{\Delta_2}{\Sigma_2},$$

are determined, characterised in that the algorithm derives $h_t$ from the following equation:

$$Arg(S_2) - Arg(S_1) = \frac{4\pi\, h_a h_t}{R} (\frac{1}{\lambda_2} - \frac{1}{\lambda_1}) (1 + \frac{Re(S_1) + Re(S_2)}{2E(\frac{h_a + h_t}{R} - \theta_o)})$$

**Patentansprüche**

1. Verfahren zur Feststellung der Höhe $h_t$ eines in niedriger Höhe befindlichen Zieles mit Hilfe eines Radargeräts, welches Radargerät mit Sende- und Empfangseinheiten versehen ist, die mit Sende- und Empfangsantennenmitteln und einer Signalverarbeitungseinheit verbunden sind, wobei ein ausgesendetes Signal direkt über das Ziel und indirekt über das Ziel und die Erdoberfläche reflektiert wird, wobei das Verfahren folgende Stufen umfaßt:

- die Beleuchtung des Zieles mit von der Sendeeinheit und den Antennenmitteln ausgesendeter elektromagnetischer Strahlung;
- das mit Hilfe der Antennenmittel Empfangen des reflektierten Sendesignals;
- das mit Hilfe der Empfangseinheit Ableiten der komplexen Summensignale $\Sigma$ und der komplexen Höhendifferenzsignale $\Delta$ aus den mit den Antennenmitteln empfangenen Signalen;
- das Ableiten einer Zielentfernung R und einer komplexen Höhenfehlerspannung $S = \Delta/\Sigma$ aus den erwähnten komplexen Signalen $\Sigma$ und $\Delta$,

dadurch gekennzeichnet, daß das Verfahren weiterhin folgende Stufen umfaßt:

- das Berechnen des realen Teiles der komplexen Höhenfehlerspannung S als Re(S);
- das Berechnen der Zeitableitung des Arguments der komplexen Höhenfehlerspannung S als

$$\frac{d}{dt} \, arg(S);$$

- das Berechnen der erwähnten Zielhöhe $h_t$ aus den vorher berechneten Werten von $\frac{d}{dt} \, arg(S)$, R und Re(S);
- das Richten der Antennenmittel auf das Ziel, indem von der auf diese Weise berechneten Zielhöhe Gebrauch gemacht wird.

2. Verfahren gemäß Anspruch 1, wobei für die Antennenmittel und die Empfangseinheit, eine reale Fehlerspannungs-kurve $E(\theta)$ für ein Ziel mit einem Elevationsfehlerwinkel $\theta$ bekannt ist, das ausgesendete Signal eine Wellenlänge $\lambda$ hat, die Antennenmittel in einer Höhe $h_a$ über der Erdoberfläche angeordnet sind und einen Elevationswinkel $\theta_o$ mit der Erdoberfläche bilden, dadurch gekennzeichnet, daß die Gleichung

$$\frac{d}{dt} arg(S) = \frac{4\pi \, h_a \, h_t}{\lambda} \cdot (1 + \frac{Re(S)}{E(\frac{h_a + h_t}{R} - \theta_o)}) \cdot \frac{d}{dt} \, (\frac{1}{R})$$

gelöst wird.

3. Verfahren gemäß Anspruch 1, wobei für die Antennenmittel und die Empfangseinheit eine reale Fehlerspannungs-kurve $E(\theta)$ für ein Ziel mit einem Elevationswinkel $\theta$ bekannt ist, die Antennnenmittel nacheinander zumindest Signale mit Wellenlängen $\lambda_1$ und $\lambda_2$ aussenden, in denen $\lambda_1 \neq \lambda_2$, die Antennenmittel in einer Höhe $h_a$ über der Erdoberfläche angeordnet sind und einen Elevationswinkel $\theta_o$ mit der Erdoberfläche bilden, und wobei die Werte

$$\Sigma_1, \, \Delta_1, \, S_1 = \frac{\Delta_1}{\Sigma_1}, \, \Sigma_2, \, \Delta_2 \text{ und } S_2 = \frac{\Delta_2}{\Sigma_2},$$

bestimmt werden, dadurch gekennzeichnet, daß für das Bestimmen von $h_t$ die Gleichung

$$Arg(S_2) - Arg(S_1) = \frac{4\pi \, h_a h_t}{R} (\frac{1}{\lambda_2} - \frac{1}{\lambda_1}) (1 + \frac{Re(S_1) + Re(S_2)}{2E(\frac{h_a + h_t}{R} - \theta_o)})$$

gelöst wird.

4. Gerät zur Feststellung der Höhe eines in niedriger Höhe befindlichen Zieles, bestehend aus einem Radargerät, versehen mit Sende- und Empfangseinheiten, die mit Sende- und Empfangsantennenmitteln verbunden sind, wobei die Sendeeinheit und die Antennenmittel für die Beleuchtung des Zieles mit elektromagnetischer Strahlung eingerichtet sind, und wobei die Empfangseinheit und die Antennenmittel für den Empfang des ausgesendeten, vom Ziel und vom Ziel über die Erdoberfläche reflektierten Signals eingerichtet sind, wobei die Antennenmittel in einer Höhe $h_a$ über der Erdoberfläche angeordnet sind und einen Elevationswinkel $\theta_o$ mit der Erdoberfläche bilden, und wobei die Empfangseinheit für die Generierung von komplexen Summensignalen $\Sigma$ und komplexen Höhen-differenzsignalen $\Delta$ eingerichtet ist, welche Signale repräsentativ für das Ziel sind, weiterhin versehen mit einem mit der Empfangseinheit verbundenen Signalprozessor, versehen mit einem Algorithmus zur Feststellung der Höhe des Zieles $h_t$ und versehen mit dem Signalprozessor verbundenen Mitteln für das Richten der Sende- und Empfangsantennenmittel auf einen Zielpunkt, wobei der Signalprozessor für die Feststellung der komplexen Höhenfehlerspannung S aus den komplexen Summensignalen $\Sigma$ und den komplexen Höhendifferenzsignalen $\Delta$, nämlich mit Hilfe der Gleichsetzung $S = \Delta/\Sigma$, und weiterhin für die Feststellung der Zielentfernung R eingerichtet ist, dadurch gekennzeichnet, daß der Signalprozessor mit Hilfe des hierin vorgesehenen Algorithmus eingerichtet ist, um

- den realen Teil von S als Re(S) zu berechnen;
- die Zeitableitung des Arguments von S als $\frac{d}{dt} \, arg(S)$ zu berechnen;
- die Zielhöhe $h_t$ aus den vorher berechneten Werten von $\frac{d}{dt} \, arg(S)$, R und Re(S) zu berechnen;
- die Sende- und Empfangsantennenmittel auf das Ziel zu richten, indem von der auf diese Weise berechneten Zielhöhe Gebrauch gemacht wird.

**5.** Gerät gemäß Anspruch 4, wobei für die Antennenmittel und die Empfangseinheit eine reale Fehlerspannungskurve $E(\theta)$ für ein Ziel mit einem Elevationsfehlerwinkel $\theta$ bekannt ist, das ausgesendete Signal eine Wellenlänge $\lambda$ hat, die Antennenmittel in einer Höhe $h_a$ über der Erdoberfläche angeordnet sind und einen Elevationswinkel $\theta_o$ mit der Erdoberfläche bilden, dadurch gekennzeichnet, daß

$$\frac{d}{dt} \arg(S) = \frac{4\pi \, h_a \, h_t}{\lambda} \cdot (1 + \frac{Re(S)}{E(\frac{h_a + h_t}{R} - \theta_o)}) \cdot \frac{d}{dt}(\frac{1}{R})$$

bestimmt ist.

**6.** Gerät gemäß Anspruch 4, wobei für die Antennenmittel und die Empfangseinheit eine reale Fehlerspannungskurve $E(\theta)$ für ein Ziel mit einem Elevationswinkel $\theta$ bekannt ist, die Antennnenmittel mit Mitteln für die aufeinanderfolgende Generierung von Sendesignale mit Wellenlängen $\lambda_1$ und $\lambda_2$ versehen sind, in denen $\lambda_1 \neq \lambda_2$, und wobei die Werte

$$\Sigma_1, \, \Delta_1, \, S_1 = \frac{\Delta_1}{\Sigma_1}, \, \Sigma_2, \, \Delta_2 \text{ und } S_2 = \frac{\Delta_2}{\Sigma_2},$$

bestimmt werden, dadurch gekennzeichnet, daß der Algorithmus $h_t$ aus der nachfolgenden Gleichung ableitet:

$$Arg(S_2) - Arg(S_1) = \frac{4\pi \, h_a h_t}{R} (\frac{1}{\lambda_2} - \frac{1}{\lambda_1}) (1 + \frac{Re(S_1) + Re(S_2)}{2E(\frac{h_a + h_t}{R} - \theta_o)})$$

## Revendications

**1.** Procédé pour déterminer la hauteur $h_t$ d'une cible de faible élévation au moyen d'un appareil radar, l'appareil radar étant muni d'unités d'émission et de réception auxquelles sont reliés des moyens d'antenne d'émission et de réception ainsi qu'une unité de traitement de signaux, de sorte qu'un signal émis est directement réfléchi par la cible et indirectement par la cible et la surface de la terre, comprenant les opérations consistant à :

- éclairer la cible par un rayonnement électromagnétique émis par l'unité d'émission et les moyens d'antenne ;

- recevoir, à l'aide des moyens d'antenne, le signal émis qui a été réfléchi ;

- obtenir, au moyen de l'unité de réception, des signaux complexes $\Sigma$ de somme et des signaux complexes $\Delta$ de différence d'élévation à partir de signaux reçus par l'intermédiaire des moyens d'antenne ;

- obtenir, à partir desdits signaux complexes $\Sigma$ et $\Delta$, une distance $R$ de la cible et une tension complexe d'erreur d'élévation $S = \Delta/\Sigma$,

caractérisé en ce que le procédé comprend en outre les opérations consistant à :

- calculer la partie réelle de la tension complexe d'erreur d'élévation $S$ sous la forme de $Re(S)$ ;

- calculer la dérivée par rapport au temps de l'argument de la tension complexe d'erreur d'élévation $S$ sous la forme de $\frac{d}{dt} \arg(S)$ ;

- calculer ladite hauteur de cible $h_t$ à partir des valeurs précédemment calculées de $\frac{d}{dt} \arg(S)$, $R$ et $Re(S)$ ;

- diriger les moyens d'antenne vers la cible en utilisant la hauteur de cible ainsi calculée.

**2.** Procédé comme revendiqué à la revendication 1, par lequel, pour les moyens d'antenne et d'unité de réception, une courbe de tension d'erreur réelle $E(\theta)$ est connue pour une cible présentant un angle d'erreur d'élévation $\theta$, le signal émis présente une longueur d'onde $\lambda$, les moyens d'antenne sont placés à une hauteur $h_a$ au-dessus de la surface de la terre et font un angle d'élévation $\theta_o$ avec la surface de la terre, caractérisé en ce qu'on résout l'équation

$$\frac{d}{dt}\arg(S) = \frac{4\pi\, h_a\, h_t}{\lambda} \cdot (1 + \frac{Re(S)}{E(\frac{h_a + h_t}{R} - \theta_o)}) \cdot \frac{d}{dt}\left(\frac{1}{R}\right)$$

3. Procédé comme revendiqué à la revendication 1, par lequel, pour les moyens d'antenne et l'unité de réception, une courbe d'erreur d'élévation réelle $E(\theta)$ est connue pour une cible présentant un angle d'élévation $\theta$, les moyens d'antenne émettent successivement au moins des signaux de longueur d'onde $\lambda 1$ et $\lambda 2$, où $\lambda 1 \neq \lambda 2$, les moyens d'antenne sont placés à une hauteur $h_a$ au-dessus de la surface de la terre et font un angle d'élévation $\theta_o$ avec la surface de la terre et par lequel les valeurs

$$\Sigma_1,\ \Delta_1,\ S_1 = \frac{\Delta_1}{\Sigma_1},\ \Sigma_2,\ \Delta_2 \text{ et } S_2 = \frac{\Delta_2}{\Sigma_2},$$

sont déterminées, caractérisé en ce que pour déterminer $h_t$ on résout l'équation

$$Arg(S_2) - Arg(S_1) = \frac{4\pi\, h_a h_t}{R} (\frac{1}{\lambda_2} - \frac{1}{\lambda_1}) (1 + \frac{Re(S_1) + Re(S_2)}{2E(\frac{h_a + h_t}{R} - \theta_o)})$$

4. Appareil pour déterminer la hauteur d'une cible de faible élévation, comprenant un appareil radar muni d'unités d'émission et de réception auxquelles sont reliés des moyens d'antenne d'émission et de réception, par lequel l'unité d'émission et les moyens d'antenne sont prévus pour éclairer la cible par un rayonnement électromagnétique et par lequel l'unité de réception et les moyens d'antenne sont prévus pour recevoir le signal émis qui est réfléchi par la cible et par la cible par l'intermédiaire de la surface de la terre, par lequel les moyens d'antenne sont placés à une hauteur $h_a$ au-dessus de la surface de la terre et font un angle d'élévation $\theta_o$ avec la surface de la terre et par lequel l'unité de réception est prévue pour produire des signaux complexes $\Sigma$ de somme et des signaux complexes $\Delta$ de différence d'élévation, qui sont représentatifs de la cible, un organe de traitement de signaux relié à l'unité de réception, muni d'un algorithme pour déterminer la hauteur $h_t$ de la cible, et des moyens reliés à l'organe de traitement de signaux pour diriger les moyens d'antenne d'émission et de réception vers un point de visée, par lequel l'organe de traitement de signaux est prévu pour déterminer la tension d'erreur d'élévation complexe S à partir des signaux complexes $\Sigma$ de somme et des signaux complexes $\Delta$ de différence d'élévation en mettant S = $\Delta/\Sigma$ en équation et prévu pour déterminer la distance R de la cible, caractérisé en ce que l'organe de traitement de signaux au moyen de l'algorithme qu'il contient est prévu pour

- calculer la partie réelle de S sous la forme de Re(S) ;

- calculer la dérivée dans le temps de l'argument de S sous la forme de $\frac{d}{dt}$ arg(S) ;

- calculer la hauteur $h_t$ de la cible d'après les valeurs précédemment calculées de $\frac{d}{dt}$ arg(S), R et Re(S) ;

- diriger les moyens d'antenne d'émission et de réception vers la cible en utilisant la hauteur ainsi calculée de la cible.

5. Appareil comme revendiqué à la revendication 4, par lequel, pour les moyens d'antenne et l'unité de réception, une courbe de tension d'erreur réelle $E(\theta)$ est connue pour une cible présentant un angle d'erreur d'élévation $\theta$, le signal émis présente une longueur d'onde $\lambda$, les moyens d'antenne sont placés à une hauteur $h_a$ au-dessus de la surface de la terre et font un angle d'élévation $\theta_o$ avec la surface de la terre, caractérisé en ce qu'on détermine

$$\frac{d}{dt}\, arg(S) = \frac{4\pi\, h_a\, h_t}{\lambda} \cdot (1 + \frac{Re(S)}{E(\frac{h_a + h_t}{R} - \theta_o)}) \cdot \frac{d}{dt}\, (\frac{1}{R})$$

**6.** Appareil comme revendiqué à la revendication 4, par lequel, pour les moyens d'antenne et l'unité de réception, une courbe de tension d'erreur réelle $E(\theta)$ est connue pour une cible présentant un angle d'élévation $\theta$, les moyens d'antenne étant muni de moyens pour produire successivement des signaux d'émission de longueur d'onde $\lambda 1$ et $\lambda 2$ où $\lambda 1 \neq \lambda 2$ et par lequel on détermine les valeurs

$$\Sigma_1,\, \Delta_1,\, S_1 = \frac{\Delta_1}{\Sigma_1},\, \Sigma_2,\, \Delta_2 \text{ et } S_2 = \frac{\Delta_2}{\Sigma_2},$$

caractérisé en ce que l'algorithme permet d'obtenir $h_t$ d'après l'équation suivante :

$$Arg(S_2) - Arg(S_1) = \frac{4\pi\, h_a h_t}{R} (\frac{1}{\lambda_2} - \frac{1}{\lambda_1}) (1 + \frac{Re(S_1) + Re(S_2)}{2E(\frac{h_a + h_t}{R} - \theta_o)})$$

Fig.1

Fig. 2

Fig. 3

EP 0 533 223 B1